# DEMANDE DE BREVET EUROPEEN

(11) **EP 1 544 794 A1**
(43) Date de publication de la demande: **22.06.2005**
(21) Numéro de dépôt: 04292869.7
(22) Date de dépôt: 03.12.2004
(51) Int. Cl.: G06T 5/40

(54) **Procédé et système d'amélioration automatique de la qualité d'images numériques**

(30) Priorité: 16.12.2003 FR 0314732
(71) Demandeur: Sagem SA, 75512 Paris Cedex 15 (FR)
(72) Inventeur: Sabatier, Pierre, 95800 Cergy (FR); Cabestan, Emmanuel, 78700 Conflans Sainte Honorine (FR)
(74) Mandataire: Debay, Yves

(57) **Abrégé**

Le procédé, permettant de produire au moins un histogramme (2) d'une forme numérique selon un premier axe correspondant à une grandeur (4) mesurable et un deuxième axe correspondant à un compte de pixels d'une valeur particulière pour ladite grandeur (4) mesurable, comporte de manière remarquable :
- une détection de la fin d'histogramme par des moyens de détection (12) consistant à discriminer un nombre déterminé (N) de pixels dans l'ordre décroissant de leur valeur pour ladite grandeur (4) mesurable pour détecter la fin d'histogramme au niveau du premier pixel non discriminé dont la valeur est dite valeur détectée (20) ;
- une comparaison entre la valeur détectée et un seuil fixé (3) ;
- une modification de l'histogramme en fonction de la comparaison, réalisée par un algorithme d'égalisation d'histogramme si la valeur détectée (20) dépasse ledit seuil (3) ou un algorithme d'étirement "stretching" dans le cas contraire.

## Description

### DOMAINE TECHNIQUE DE L'INVENTION

La présente invention se rapporte au domaine des méthodes d'amélioration d'image destinées à des appareils d'impression d'images numériques, notamment les imprimantes couleurs. L'invention concerne plus particulièrement un procédé et un système d'amélioration automatique de la qualité d'images numériques.

Actuellement, il existe plusieurs méthodes pour résoudre les problèmes rencontrés dans le domaine de la photo numérique. Ainsi, on fait généralement appel à des algorithmes intervenant sur les histogrammes des images pour atténuer les effets liés à la sous-exposition et au contre-jour. Toutefois, l'utilisation de tels algorithmes est empirique, l'utilisateur devant choisir, voire personnaliser l'algorithme qui lui paraît le plus adapté.

Il existe dès lors un besoin pour identifier de manière automatique le type d'amélioration à apporter à une image numérique de type photo.

### ARRIERE-PLAN TECHNOLOGIQUE DE L'INVENTION

Dans l'art antérieur, il est connu par la demande de brevet EP 0 772 158, un système de traitement d'image pour produire des images à contraste rehaussé. Ce système utilise l'histogramme de la forme numérique correspondant à l'image pour y détecter des configurations, en distinguant des régions de l'histogramme à répartition gaussienne ainsi que des régions à répartition uniforme. Ensuite, une égalisation d'histogramme est réalisée séparément sur chaque groupe pour produire un histogramme modifié représentant une image à contraste rehaussé.

Un inconvénient de ce système est la complexité de l'opération de traitement qui exige un matériel informatique performant donc encombrant. De plus, il n'est question que d'un seul type d'amélioration d'image : le rehaussage de contraste. Ce problème est crucial notamment dans des appareils dont la miniaturisation ne permet pas d'avoir des capacités de traitement suffisamment performantes pour les méthodes de l'art antérieur. Par ailleurs, si l'on veut procéder à un étirement ou stretching pour accroître la dynamique visuelle d'une image, il faut alors utiliser une méthode complètement différente.

Le problème des photos numériques pour lesquelles tout le spectre du rouge, vert et bleu n'est pas utilisé est pourtant rencontré fréquemment, d'où l'intérêt de l'opération de stretching dans l'amélioration de la qualité d'images numériques.

### DESCRIPTION GENERALE DE L'INVENTION

La présente invention a donc pour objet de supprimer un ou plusieurs des inconvénients de l'art antérieur en définissant un procédé d'amélioration de la qualité d'images numériques spécialement adapté pour appliquer automatiquement à l'histogramme soit un stretching, soit une égalisation de d'histogramme, en fonction du défaut à corriger.

A cet effet, l'invention concerne un procédé d'amélioration automatique de la qualité d'images numériques composées chacune d'une série de pixels, mis en oeuvre par un système de traitement d'image, ledit système comprenant un module de production d'histogramme et une unité de mémorisation, ledit procédé comportant une étape de stockage d'une forme numérique d'une image d'origine dans l'unité de mémorisation du système, une étape de production par le module de production d'histogramme d'au moins un histogramme de ladite forme numérique selon un premier axe correspondant à une valeur codée de la luminance et un deuxième axe correspondant à un compte de pixels d'une valeur particulière pour ladite valeur codée, procédé caractérisé en ce qu'il comporte :
- une étape de détection de la fin d'histogramme par des moyens de détection dudit système consistant à discriminer un nombre déterminé de pixels dans l'ordre décroissant de leur valeur pour ladite valeur codée de façon à détecter la fin d'histogramme au niveau du premier pixel non discriminé dont la valeur est dite valeur détectée ;
- une étape de comparaison entre la valeur détectée et un seuil fixé pour la valeur codée qui est paramétré dans le système de traitement d'image;
- une étape de modification de l'histogramme en fonction du dépassement du seuil par la valeur détectée, la modification étant réalisée par un algorithme d'égalisation d'histogramme si la valeur détectée dépasse ledit seuil, un algorithme d'étirement "stretching" étant en revanche utilisé si la valeur détectée ne dépasse pas ledit seuil ;
- une étape d'utilisation de l'histogramme modifié pour ajuster des valeurs codées de la luminance dans ladite forme numérique.

Selon une autre particularité de l'invention, les étapes de production d'histogramme, de détection de fin d'histogramme, de comparaison de la valeur détectée avec le seuil sont respectivement réalisées sur chacun des deux ou trois histogrammes relatifs à la même image d'origine et pour chacun desquels ladite valeur codée associée correspond à une composante de couleur distincte, la modification étant réalisée par un algorithme de stretching uniquement si la valeur détectée ne dépasse pas ledit seuil pour au moins deux histogrammes, l'algorithme d'égalisation d'histogramme étant utilisé dans le cas contraire.

Selon une autre particularité de l'invention, le nombre déterminé de pixels à discriminer lors de l'étape de détection est proportionnel au nombre de pixels de l'image numérique.

Selon une autre particularité de l'invention, le pourcentage de pixels à discriminer par rapport à la totalité des pixels de l'image numérique est de l'ordre de 1 millième.

Selon une autre particularité, le compte de pixels pour chaque valeur codée de la luminance est un compte de pixels de cette valeur particulière, ladite étape de détection étant réalisée pour trois histogrammes différents reportant chacun respectivement une valeur numérique correspondant à une composante de luminance d'une couleur distincte à choisir parmi le rouge, le vert et le bleu ou bien parmi le bleu cyan, le rose magenta et le jaune.

Ainsi de manière avantageuse, l'invention permet de détecter par exemple si toute la dynamique du rouge, du vert, du bleu est utilisée, de sorte qu'un utilisateur ou un logiciel complémentaire peut choisir entre une amélioration de l'image produite par étirement de type stretching ou par égalisation d'histogramme.

Selon une autre particularité, pour une dynamique de luminance comprise entre 0 et 255, le seuil fixé est compris entre 235 et 255.

Selon une autre particularité, l'étape de détection de la fin d'histogramme est réalisée pour chacun des trois histogrammes en parcourant l'histogramme dans le sens de la valeur codée de la luminance la plus haute à la valeur la plus basse et en calculant pour chaque valeur successive de l'histogramme parcouru une variable cumulant le compte de pixels ainsi recensés, la détection de la fin d'histogramme s'effectuant lorsque la valeur de cette variable dépasse ledit nombre déterminé de pixels à discriminer.

Selon une autre particularité, l'étape d'utilisation de l'histogramme modifié est réalisée par le système de traitement d'image pour former une image de qualité améliorée sur des moyens d'affichage ou par des moyens d'impression d'un appareil incorporant ledit système.

Un autre objet de l'invention est de supprimer un ou plusieurs des inconvénients de l'art antérieur en définissant un système d'amélioration automatique de la qualité d'images numériques facilement utilisable pour pallier des défauts rencontrés fréquemment sur des photos numériques : la sous-exposition et le contre-jour.

A cet effet, l'invention propose un système de traitement pour améliorer automatiquement la qualité d'images numériques, dans lequel une image est composée d'une série de pixels, comprenant une unité de mémorisation apte à stocker une forme numérique d'une image d'origine et un module de production d'histogramme agencé pour générer au moins un histogramme d'une dite forme numérique selon un premier axe correspondant à une valeur codée de la luminance et un deuxième axe correspondant à un compte de pixels d'une valeur particulière pour ladite valeur codée, caractérisé en ce qu'il comporte :
- des moyens de détection de la fin d'un histogramme incluant un module de calcul apte à discriminer un nombre déterminé de pixels de l'histogramme dans l'ordre décroissant de leur valeur pour ladite valeur codée de façon à détecter la fin d'histogramme au niveau du premier pixel non discriminé, lesdits moyens de détection étant agencés pour déterminer la valeur dite valeur détectée attribuée au premier pixel non discriminé dans l'histogramme ;
- des moyens de comparaison couplés aux moyens de détection pour comparer la valeur détectée à un seuil fixe paramétré dans l'unité de mémorisation ;
- des moyens de modification d'histogramme, couplés aux moyens de comparaison, incluant respectivement au moins un algorithme d'égalisation d'histogramme et au moins un algorithme de stretching, et aptes à déclencher respectivement l'un ou l'autre des algorithmes pour modifier l'histogramme en fonction d'au moins un critère fourni par les moyens de comparaison respectivement représentatif du dépassement ou du non-dépassement du seuil par ladite valeur détectée ;
- une unité d'ajustement apte à utiliser l'histogramme modifié pour ajuster des valeurs codées de la luminance dans ladite forme numérique.

Selon une autre particularité, les moyens de modification d'histogramme sont agencés pour déclencher automatiquement l'algorithme de stretching si les moyens de comparaison indiquent dans ledit critère que la différence entre la valeur détectée et le seuil fixe paramétré est négative, et déclencher l'algorithme d'égalisation d'histogramme en cas d'indication contraire.

Selon une autre particularité, le compte de pixels pour chaque valeur codée de la luminance est un compte de pixels de cette valeur particulière, le module de production d'histogramme étant agencé pour générer trois histogrammes différents reportant chacun la valeur codée de la luminance correspondant à une composante de couleur distincte.

Selon une autre particularité, le module de production d'histogramme est agencé pour générer des histogrammes à différentes composantes de couleur parmi lesquelles on trouve les trois couleurs rouge, vert et bleu et/ou les trois couleurs bleu cyan, rose magenta et jaune.

Selon une autre particularité, les moyens de détection sont aptes à déterminer respectivement ladite valeur détectée pour trois histogrammes relatifs à la même image d'origine et pour chacun desquels ladite valeur codée associée correspond à une composante de couleur distincte, lesdits histogrammes étant fournis par le module de production d'histogramme.

Selon une autre particularité, les moyens de modification d'histogramme sont agencés pour recevoir de la part des moyens de comparaison au moins deux données représentatives de résultats distincts pour la comparaison avec ledit seuil fixé obtenus à partir d'histogrammes pour lesquels ladite valeur codée associée correspond à une composante de couleur distincte, de façon à déclencher l'algorithme de stretching uniquement si deux des résultats correspondent à un non-dépassement du seuil par la valeur de fin d'histogramme détectée.

Selon une autre particularité de l'invention, les moyens de modification d'histogramme sont agencés pour recevoir de la part des moyens de comparaison au moins deux données représentatives de résultats distincts pour la comparaison avec ledit seuil fixé obtenus à partir d'histogrammes pour lesquels ladite valeur codée associée correspond à une composante de couleur distincte, de façon à déclencher l'algorithme d'égalisation d'histogramme uniquement si deux des résultats correspondent à un dépassement du seuil par la valeur de fin d'histogramme détectée.

Selon une autre particularité, le système selon l'invention comporte des moyens de détermination du nombre total de pixels pour l'image numérique à améliorer, ledit module de calcul étant agencé pour utiliser un facteur de proportionnalité stocké dans l'unité de mémorisation à combiner avec le nombre total de pixels de l'image numérique pour obtenir ledit nombre déterminé de pixels à discriminer.

Selon une autre particularité, le facteur de proportionnalité stocké dans l'unité de mémorisation est de l'ordre de 10⁻⁵.

Selon une autre particularité, le module de production d'histogramme est apte à fournir des histogrammes reportant une valeur numérique comprise entre 0 et 255 correspondant à une composante de luminance, tandis que le seuil fixé est compris entre 235 et 255.

L'invention, avec ses caractéristiques et avantages, ressortira plus clairement à la lecture de la description faite en référence aux dessins annexés dans lesquels :
- la figure 1 représente un mode de réalisation du système de traitement d'image selon l'invention,
- la figure 2 représente un mode de réalisation pour le déroulement des étapes du processus selon l'invention d'amélioration automatique de la qualité d'image.

De plus, l'annexe illustre un exemple de programme d'implémentation susceptible d'être utilisé dans la présente invention.

### DESCRIPTION DES MODES DE REALISATION PREFERES DE L'INVENTION

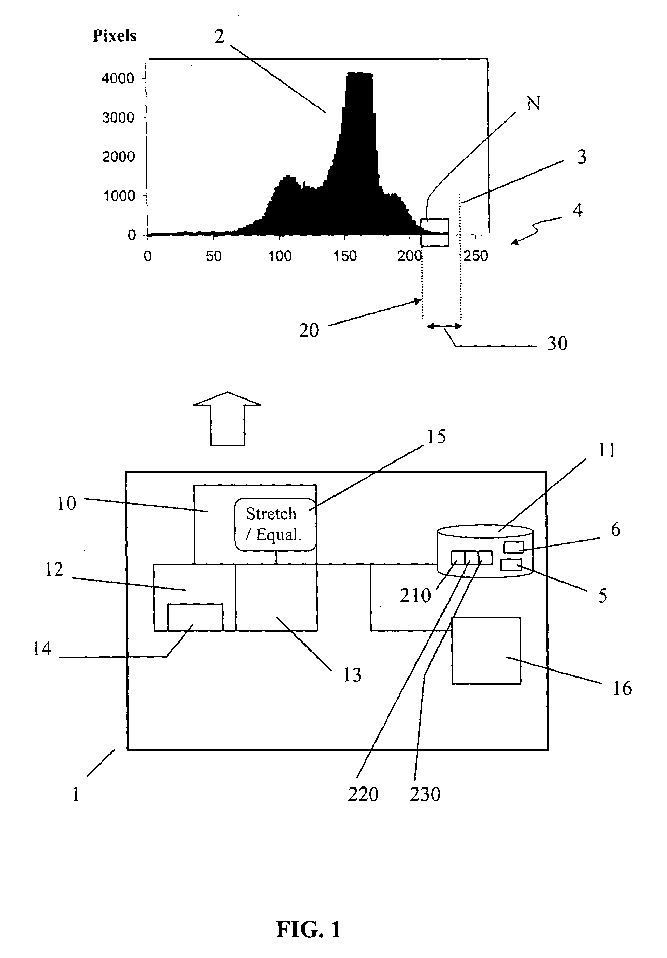

L'invention va être à présent décrite en référence à la figure 1.

Le système (1) de traitement d'image représenté sur la figure 1 comprend une unité de mémorisation (11) apte à stocker une forme numérique d'une image d'origine (5) et un module (10) de production d'histogramme. L'image d'origine (5) peut consister en une image captée au niveau d'un capteur qui permet de convertir une grandeur physique mesurable telle que la luminance de l'image captée en signal analogique. L'image captée peut ainsi être échantillonnée et codée sur un nombre déterminé de bits. Le module (10) de production d'histogramme est agencé pour générer au moins un histogramme (2) d'une dite forme numérique selon un premier axe correspondant à une valeur codée (4), telle que par exemple la luminance, et un deuxième axe correspondant à un compte de pixels d'une valeur particulière pour ladite valeur codée (4).

De manière connue, la forme numérique de l'image est composée d'une série de pixels. Une image au format 640*480 comporte ainsi 307200 pixels. L'histogramme permet de représenter une valeur numérique représentative d'une propriété ou grandeur mesurable caractéristique de l'image. Dans l'exemple de la figure 1, il s'agit d'une mesure d'intensité lumineuse par mètre carré ou luminance, exprimée dans une unité arbitraire. Autrement dit, l'histogramme (2) contient une entrée pour chaque valeur possible de luminance codée sur 8 bits, c'est-à-dire comprise entre 0 et 255, à laquelle correspond un compte des pixels de l'image qui ont cette valeur particulière de luminance. Un autre type de codage peut naturellement envisagé. Des moyens de détermination du nombre total de pixels pour l'image numérique à améliorer sont prévus dans le système (1) de traitement d'image.

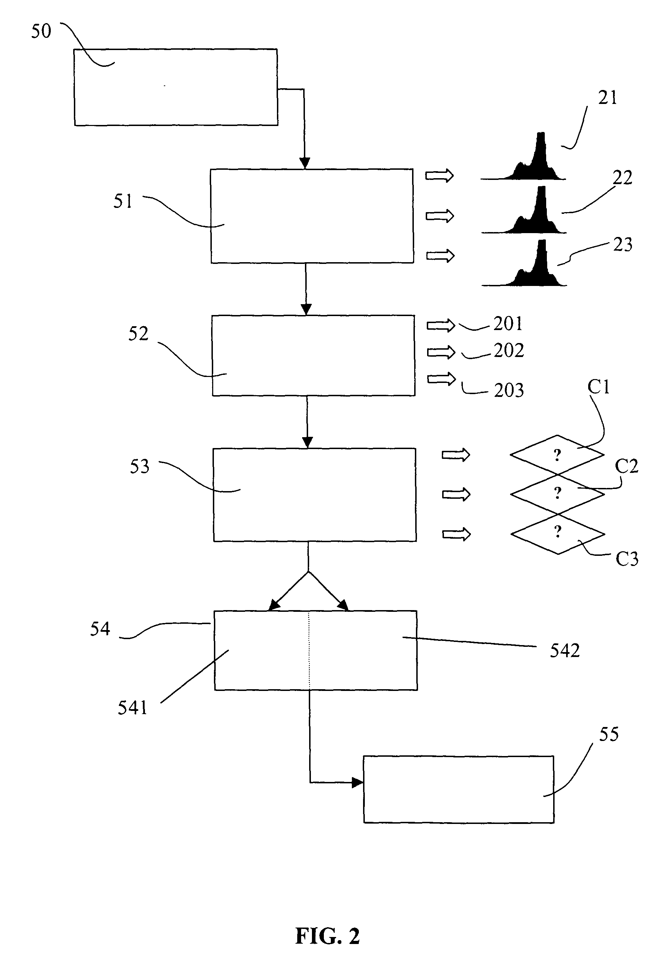

Le module (10) de production d'histogramme est en outre agencé pour générer trois histogrammes différents (21, 22, 23, figure 2) correspondant chacun à la luminance qui correspond à une composante de couleur distincte, par exemple rouge, vert et bleu. Les composantes de couleur peuvent également être le bleu cyan, le rose magenta et le jaune. La composante pour le bleu cyan peut être obtenue à partir de la composante pour le rouge en réalisant l'opération : «255 - composante rouge ». Les composantes magenta et jaune peuvent être obtenues de manière analogue à partir respectivement des composantes de couleur verte et de couleur bleue.

Pour améliorer de manière automatique la qualité d'images numériques, le système (1) de traitement d'image est capable de transformer l'image, soit en réalisant une égalisation d'histogramme sur trois composantes de couleur confondues par modification de la fonction de répartition des intensités des pixels, soit en effectuant un étirement appelé stretching pour accroître la dynamique visuelle de l'image et saturer un très faible pourcentage de pixels. Pour cela, le système comporte des moyens (15) de modification d'histogramme constitués respectivement d'au moins un algorithme d'égalisation d'histogramme et d'au moins un algorithme de stretching. De tels moyens (15) de modification d'histogramme peuvent déclencher respectivement l'un ou l'autre des algorithmes conçus pour modifier l'histogramme (2) sur trois composantes de couleur confondues réalisant respectivement soit une fonction d'égalisation d'histogramme soit une fonction d'étirement "stretching".

On comprend que les deux types d'algorithmes, destinés aux photos numériques sous-exposées ou en contre-jour, sont particulièrement différents l'un de l'autre et le principal problème à résoudre est de savoir quel algorithme appliquer suivant le type de photo, et la manière de rendre cette différenciation automatique.

Dans ce but, le système (1) de traitement d'image selon l'invention dispose de fonctionnalités visant à distinguer le type d'amélioration à appliquer à une photo par analyse de la fin de l'histogramme (2). Le système (1) présenté à la figure 1 comporte ainsi des moyens de détection (12) de la fin d'un histogramme incluant un module de calcul (14) apte à discriminer un nombre déterminé (N) de pixels de l'histogramme analysé dans l'ordre décroissant de leur valeur pour ladite valeur codée (4) de la luminance de façon à détecter la fin de l'histogramme analysé au niveau du premier pixel non discriminé. Ces moyens de détection (12) sont agencés pour déterminer la valeur dite valeur détectée (20) attribuée au premier pixel non discriminé dans l'histogramme (2).

Le fait de situer précisément la fin de l'histogramme (2), en écartant volontairement quelques pixels "égarés" qui peuvent se situer après la fin apparente de l'histogramme (2), permet de se rendre compte si l'histogramme nécessite ou non un stretching. En effet si la fin de l'histogramme correspond à des valeurs extrêmement proches ou égales à 255, alors un étirement de type stretching ne permettra pas d'améliorer la qualité d'image. Une égalisation d'histogramme, pour redistribuer les intensités vers le centre de l'histogramme (2), peut en revanche être effectuée dans ce cas. Dans le cas contraire où la valeur détectée (20) pour la fin d'histogramme apparaît comme faible, le stretching doit être choisi.

Dans le mode de réalisation de la figure 1, des moyens de comparaison (13), couplés aux moyens de détection (12), sont prévus dans le système (1) de traitement d'image pour comparer la valeur détectée (20) à un seuil fixe (3) paramétré dans l'unité de mémorisation (11). Les moyens (15) de modification d'histogramme sont couplés à ces moyens de comparaison (13) et sont agencés pour déclencher respectivement l'un ou l'autre des deux algorithmes d'égalisation et d'étirement en fonction du dépassement ou du non-dépassement du seuil (3) par ladite valeur détectée (20). Plus précisément, l'algorithme de stretching est déclenché automatiquement si les moyens de comparaison indiquent que la différence (30) entre la valeur détectée (20) et le seuil fixe (3) paramétré est négative. En cas d'indication contraire, c'est l'algorithme d'égalisation d'histogramme qui est déclenché. Une unité d'ajustement (16) apte à utiliser l'histogramme modifié permet d'ajuster des valeurs codées (4) de la luminance dans la forme numérique de l'image dont la qualité doit être améliorée.

Le fonctionnement et le procédé de l'invention vont être à présent décrits en référence aux figures 1 et 2.

Dans un mode de réalisation de l'invention, lesdits moyens de détection (12) sont aptes à déterminer respectivement ladite valeur détectée (20) pour chacun des trois histogrammes (21, 22, 23) relatifs à la même image d'origine (5) et pour chacun desquels la luminance associée correspond à une composante de couleur distincte. Ces trois histogrammes (21, 22, 23) sont fournis par le module (10) de production d'histogramme après l'étape (50) de stockage de la forme numérique de l'image d'origine (5) dans l'unité de mémorisation (11) du système (1), lors d'une étape (51) de production d'histogramme explicitée en annexe. L'histogramme de la luminance, pour lequel trois composantes de couleur, par exemple rouge, vert et bleu, sont confondues, peut également être généré lors de cette étape (51). Selon l'exemple de la figure 2, chacun des trois histogrammes sont produits sous forme de tables (21, 220, 230) de données qui sont mémorisées dans l'unité de mémorisation (11).

Dans le mode de réalisation de la figure 2, on comprend que l'algorithme de stretching est déclenché automatiquement si les moyens de comparaison (13) indiquent que la différence (30) entre la valeur détectée (20) et le seuil fixe (3) paramétré est négative pour au moins deux des histogrammes (21, 2, 23) fournis par le module (10) de production d'histogramme. En effet, une étape (52) de détection de la fin d'histogramme peut être réalisée par les moyens de détection (12) du système de traitement d'image pour les trois histogrammes (21, 22, 23) de la figure 2 correspondant à des composantes de couleur distincte, de sorte que l'étape (53) de comparaison entre valeur détectée (20) et seuil fixé (3) est effectuée pour chacun de ces histogrammes (21, 22, 23). Le seuil fixé (3) est par exemple compris entre 235 et 255. Dans le cas de la figure 1, ce seuil (3) est d'environ 240. Dans l'exemple de l'annexe jointe, ce seuil est de 247.

Cette étape (52) de détection de la fin d'histogramme est réalisée pour chacun des trois histogrammes (21, 22, 23) en parcourant l'histogramme de la valeur numérique la plus haute à la valeur la plus basse et en calculant pour chaque valeur successive de l'histogramme parcouru une variable cumulant le compte de pixels ainsi recensés. La détection de la fin d'histogramme s'opère lorsque la valeur de cette variable dépasse ledit nombre déterminé (N) de pixels à discriminer. Dans un mode de réalisation de l'invention, ce nombre déterminé (N) de pixels à discriminer lors de l'étape de détection (52) est proportionnel au nombre de pixels de l'image numérique. Le pourcentage de pixels à discriminer par rapport à la totalité des pixels de l'image numérique est par exemple et de manière non limitative de l'ordre de un millième. Autrement dit, le facteur de proportionnalité est d'environ 10⁻⁵, ce qui signifie pour cet exemple qu'un pixel sera ignoré et discriminé lors de l'étape de détection (52) si l'image comporte 100000 pixels. Le module de calcul (14) peut être agencé pour utiliser un facteur de proportionnalité stocké dans l'unité de mémorisation (11) à combiner avec le nombre total de pixels de l'image numérique pour obtenir ledit nombre déterminé (N) de pixels à discriminer.

Comme représenté à la figure 2, les moyens de comparaison (13) peuvent être agencés pour recevoir de la part des moyens de détection (12) au moins deux données choisies parmi les trois suivantes (201, 202, 203) représentatives des résultats distincts obtenus pour chacun desdits histogrammes (21, 22, 23). Chacune des ces données est comparée avec ledit seuil (3).

Les moyens (15) de modification d'histogramme sont agencés pour recevoir de la part des moyens de comparaison (13) au moins un critère respectivement représentatif du dépassement ou du non-dépassement du seuil (3) par ladite valeur détectée (20). Dans le mode de réalisation de la figure 2, au moins deux données choisies parmi les trois suivantes (C1, C2, C3) servant de critère pour chacun des histogrammes (21, 22, 23) sont ainsi fournis aux moyens (15) de modification d'histogramme par les moyens de comparaison (13). Ces données (C1, C2, C3) sont plus précisément représentatives de résultats distincts obtenus par la comparaison des différentes données (201, 202, 203) de détection avec ledit seuil (3) fixé.

Les moyens (15) de modification d'histogramme déclenchent ensuite l'algorithme d'étirement "stretching" uniquement si deux des résultats correspondent à un non-dépassement du seuil (3) par la valeur détectée (20) de fin d'histogramme. L'algorithme d'égalisation d'histogramme est déclenché de manière analogue uniquement si deux des résultats correspondent à un dépassement du seuil (3) par la valeur détectée (20) de fin d'histogramme.

L'utilisation de l'une de ces deux fonctions d'étirement ou d'égalisation sur les données représentatives soit de la luminance soit d'une composante de couleur permet de générer un fichier image modifiée (6) dont les données sont soit mémorisées, soit affichées, soit imprimées. Le système de traitement d'image peut en effet être incorporé dans un appareil disposant soit de moyens d'affichage de l'image soit de moyens d'impression de cette image. L'annexe jointe présente un exemple de réalisation de programme implémentant la méthode pour d'une part obtenir lesdites données (201, 202, 203) devant être comparées avec le seuil fixé (3) et d'autre part choisir le type de modification à effectuer.

Autrement dit, comme représenté à la figure 2, l'étape (54) de modification de l'histogramme (2) de luminance correspondant à l'image numérique dont la qualité doit être améliorée, est réalisée en fonction du dépassement du seuil (3) par la valeur détectée (20). En cas d'indication d'un non-dépassement dudit seuil (3), une sous-étape (541) permet de faire appel à l'algorithme de stretching mémorisé dans l'unité de mémorisation (11) pour réaliser la modification d'histogramme. En cas d'indication contraire résultant des données (C1, C2, C3) fournies par les moyens de comparaison (13), une autre sous-étape (542) est réalisée pour faire appel à l'algorithme d'égalisation d'histogramme, stocké également dans l'unité de mémorisation (11), lors de la modification d'histogramme.

Une étape (55) d'utilisation de l'histogramme modifié permet d'ajuster la valeur de l'intensité lumineuse par mètre carré ou grandeur équivalente dans ladite forme numérique, de façon à former une image modifiée (6) de qualité améliorée.

Naturellement, les étapes de production d'histogramme (51), de détection de fin d'histogramme (52), de comparaison (53) de la valeur détectée (20) avec le seuil (3) peuvent être réalisées pour deux, trois ou plusieurs histogrammes (21, 22, 23) relatifs à la même image d'origine (5) et pour chacun desquels ladite grandeur (4) mesurable associée correspond à une composante de couleur distincte.

Les modules et étapes décrits précédemment peuvent être réalisés dans un composant électronique masqué ou programmé. Le masque ou le programme implémentant les étapes du procédé peut être de la forme décrite ci-après en annexe.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

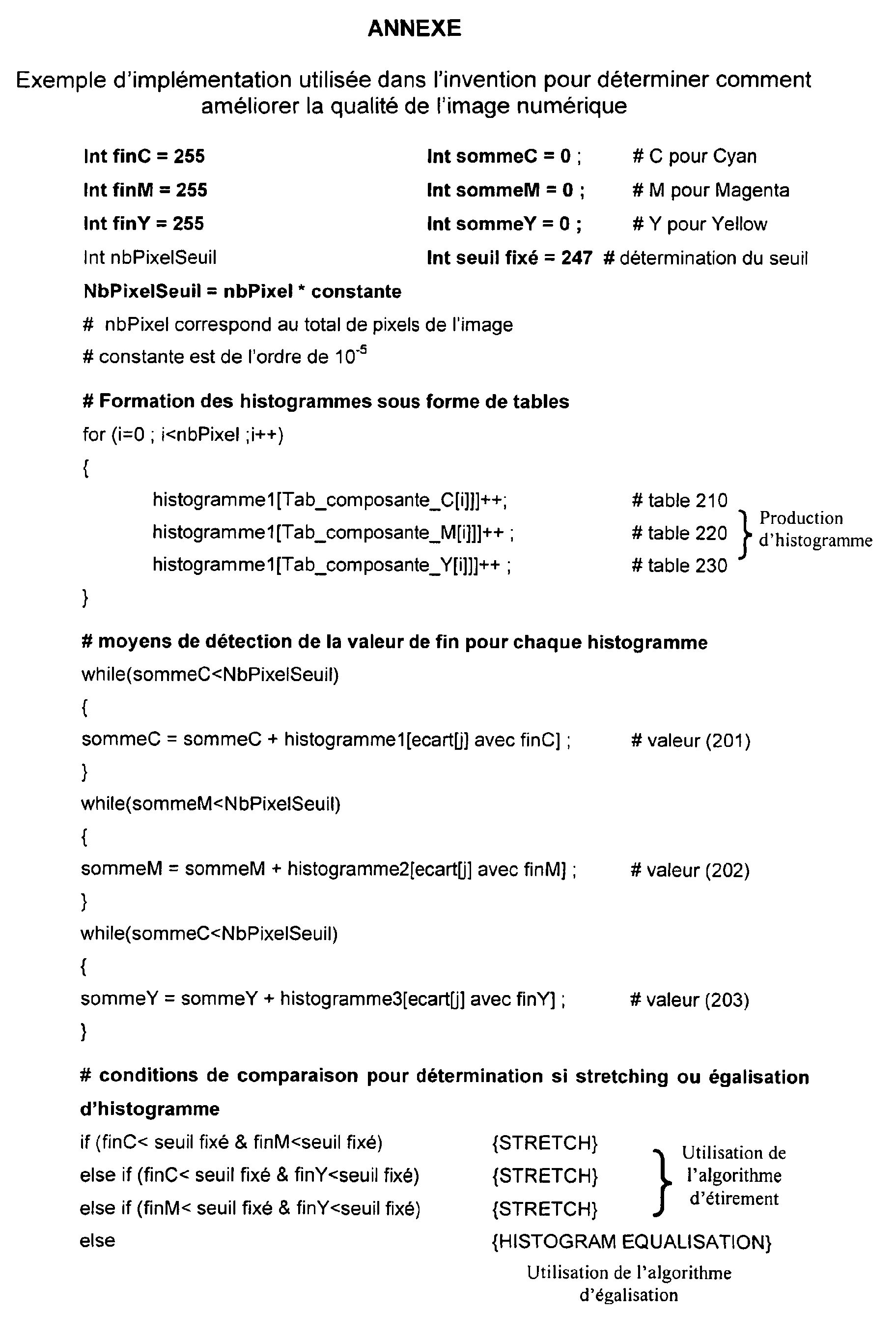

## Revendications

1. Procédé d'amélioration automatique de la qualité d'images numériques composées chacune d'une série de pixels, mis en oeuvre par un système (1) de traitement d'images, ledit système comprenant un module (10) de production d'histogramme et une unité de mémorisation (11), ledit procédé comportant une étape (50) de stockage d'une forme numérique d'une image d'origine (5) dans l'unité de mémorisation (11) dudit système (1), une étape (51) de production par le module (10) de production d'histogramme d'au moins un histogramme (2) de ladite forme numérique selon un premier axe correspondant à une valeur codée (4) de la luminance et un deuxième axe correspondant à un compte de pixels d'une valeur particulière pour ladite valeur codée (4), procédé **caractérisé en ce qu'**il comporte :
- une étape (52) de détection de la fin d'histogramme par des moyens de détection (12) du système de traitement d'image consistant à discriminer un nombre déterminé (N) de pixels dans l'ordre décroissant de leur valeur pour ladite valeur codée (4) de façon à détecter la fin d'histogramme au niveau du premier pixel non discriminé dont la valeur est dite valeur détectée (20) ;
- une étape (53) de comparaison entre la valeur détectée et un seuil fixé (3) pour la grandeur (4) mesurable qui est paramétré dans le système (1 ) de traitement d'images ;
- une étape (54) de modification de l'histogramme en fonction du dépassement du seuil (3) par la valeur détectée (20), la modification étant réalisée par un algorithme d'égalisation d'histogramme si la valeur détectée (20) dépasse ledit seuil (3), un algorithme d'étirement "stretching" étant en revanche utilisé si la valeur détectée (20) ne dépasse pas ledit seuil (3) ;
- une étape (55) d'utilisation de l'histogramme modifié pour ajuster des valeurs codées (4) de la luminance dans ladite forme numérique.

2. Procédé selon la revendication 1, **caractérisé en ce que** les étapes de production d'histogramme (51), de détection de fin d'histogramme (52), de comparaison (53) de la valeur détectée (20) avec le seuil (3) sont respectivement réalisées sur chacun des deux ou trois histogrammes (21, 22, 23) relatifs à la même image d'origine (5) et pour chacun desquels ladite grandeur (4) mesurable associée correspond à une composante de couleur distincte, la modification étant réalisée par un algorithme de stretching uniquement si la valeur détectée ne dépasse pas ledit seuil (3) pour au moins deux histogrammes, l'algorithme d'égalisation d'histogramme étant utilisé dans le cas contraire.

3. Procédé selon la revendication 1 ou 2, dans lequel le nombre déterminé de pixels à discriminer lors de l'étape de détection est proportionnel au nombre de pixels de l'image numérique.

4. Procédé selon l'une quelconque des revendications 1 à 3, dans lequel le pourcentage de pixels à discriminer par rapport à la totalité des pixels de l'image numérique est de l'ordre de 1 millième.

5. Procédé selon l'une quelconque des revendications 1 à 4, dans lequel le compte de pixels pour chaque valeur codée de la luminance est un compte de pixels de cette valeur particulière, ladite étape de détection étant réalisée pour trois histogrammes différents reportant chacun respectivement une valeur numérique correspondant à une composante de luminance d'une couleur distincte à choisir parmi le rouge, le vert et le bleu ou bien parmi le bleu cyan, le rose magenta et le jaune.

6. Procédé selon l'une quelconque des revendications 1 à 5, dans lequel, pour une dynamique de luminance comprise entre 0 et 255, le seuil fixé (3) est compris entre 235 et 255.

7. Procédé selon la revendication 5 ou 6, dans lequel l'étape de détection de la fin d'histogramme est réalisée pour chacun des trois histogrammes en parcourant l'histogramme dans le sens de la valeur numérique la plus haute à la valeur la plus basse et en calculant pour chaque valeur successive de l'histogramme parcouru une variable cumulant le compte de pixels ainsi recensés, la détection de la fin d'histogramme s'effectuant lorsque la valeur de cette variable dépasse ledit nombre déterminé de pixels à discriminer.

8. Procédé selon l'une quelconque des revendications 1 à 7, dans lequel l'étape (55) d'utilisation de l'histogramme modifié est réalisée par le système (1) de traitement d'image pour former une image de qualité améliorée sur des moyens d'affichage ou par des moyens d'impression d'un appareil incorporant ledit système (1).

9. Système (1) de traitement d'image pour améliorer automatiquement la qualité d'images numériques, dans lequel une image est composée d'une série de pixels, comprenant une unité de mémorisation (11) apte à stocker une forme numérique d'une image d'origine (5) et un module (10) de production d'histogramme agencé pour générer au moins un histogramme (2) d'une dite forme numérique selon un premier axe correspondant à une grandeur (4) mesurable et un deuxième axe correspondant à un compte de pixels d'une valeur particulière pour ladite grandeur (4) mesurable, **caractérisé en ce qu'**il comporte :
- des moyens de détection (12) de la fin d'un histogramme incluant un module de calcul (14) apte à discriminer un nombre déterminé (N) de pixels de l'histogramme (2) dans l'ordre décroissant de leur valeur pour ladite grandeur (4) mesurable de façon à détecter la fin d'histogramme au niveau du premier pixel non discriminé, lesdits moyens de détection (12) étant agencés pour déterminer la valeur dite valeur détectée (20) attribuée au premier pixel non discriminé dans l'histogramme (2) ;
- des moyens de comparaison (13) couplés aux moyens de détection pour comparer la valeur détectée (20) à un seuil fixe (3) paramétré dans l'unité de mémorisation (11) ;
- des moyens (15) de modification d'histogramme, couplés aux moyens de comparaison (13), incluant respectivement au moins un algorithme d'égalisation d'histogramme et au moins un algorithme de stretching, et aptes à déclencher respectivement l'un ou l'autre des algorithmes pour modifier l'histogramme (2) en fonction d'au moins un critère fourni par les moyens de comparaison respectivement représentatif du dépassement ou du non-dépassement du seuil (3) par ladite valeur détectée (20) ;
- une unité d'ajustement (16) apte à utiliser l'histogramme modifié pour ajuster la valeur de la grandeur (4) mesurable dans ladite forme numérique.

10. Système selon la revendication 9, dans lequel les moyens (15) de modification d'histogramme sont agencés pour déclencher automatiquement l'algorithme de stretching si les moyens de comparaison (13) indiquent dans ledit critère que la différence (30) entre la valeur détectée (20) et le seuil fixe (3) paramétré est négative, et déclencher l'algorithme d'égalisation d'histogramme en cas d'indication contraire.

11. Système selon la revendication 9 ou 10, dans lequel le compte de pixels pour chaque valeur codée de la luminance est un compte de pixels de cette valeur particulière, le module (10) de production d'histogramme étant agencé pour générer trois histogrammes différents (21, 22, 23) reportant chacun la valeur codée de la luminance correspondant à une composante de couleur distincte.

12. Système selon l'une des revendications 9 à 11, dans lequel le module de production (10) d'histogramme est agencé pour générer des histogrammes (21, 22, 23) à différentes composantes de couleur parmi lesquelles on trouve les trois couleurs rouge, vert et bleu et/ou les trois couleurs bleu cyan, rose magenta et jaune.

13. Système selon l'une quelconque des revendications 9 à 12, dans lequel lesdits moyens de détection (12) sont aptes à déterminer respectivement ladite valeur détectée (20) pour trois histogrammes (21, 22, 23) relatifs à la même image d'origine (5) et pour chacun desquels ladite grandeur mesurable associée correspond à une composante de couleur distincte, lesdits histogrammes (21, 22, 23) étant fournis par le module (10) de production d'histogramme.

14. Système selon l'une quelconque des revendications 9 à 13, dans lequel les moyens (15) de modification d'histogramme sont agencés pour recevoir de la part des moyens de comparaison (13) au moins deux données (C1, C2, C3) représentatives de résultats distincts pour la comparaison avec ledit seuil (3) fixé obtenus à partir d'histogrammes pour lesquels ladite grandeur (4) mesurable associée correspond à une composante de couleur distincte, de façon à déclencher l'algorithme de stretching uniquement si deux des résultats correspondent à un non-dépassement du seuil (3) par la valeur détectée (20) de fin d'histogramme.

15. Système selon l'une quelconque des revendications 9 à 14, dans lequel les moyens (15) de modification d'histogramme sont agencés pour recevoir de la part des moyens de comparaison (13) au moins deux données (C1, C2, C3) représentatives de résultats distincts pour la comparaison avec ledit seuil (3) fixé obtenus à partir d'histogrammes (21, 22, 23) pour lesquels ladite grandeur (4) mesurable associée correspond à une composante de couleur distincte, de façon à déclencher l'algorithme d'égalisation d'histogramme uniquement si deux des résultats correspondent à un dépassement du seuil (3) par la valeur détectée (20) de fin d'histogramme.

16. Système selon l'une quelconque des revendications 9 à 15, **caractérisé en ce qu'**il comporte des moyens de détermination du nombre total de pixels pour l'image numérique à améliorer, ledit module de calcul (14) étant agencé pour utiliser un facteur de proportionnalité stocké dans l'unité de mémorisation (11) à combiner avec le nombre total de pixels de l'image numérique pour obtenir ledit nombre déterminé (N) de pixels à discriminer.

17. Système selon la revendication 16, dans lequel ledit facteur de proportionnalité stocké dans l'unité de mémorisation (11) est de l'ordre de 10⁻⁵.

18. Système selon l'une quelconque des revendications 9 à 17, dans lequel le module (10) de production d'histogramme est apte à fournir des histogrammes (2, 21, 22 23) reportant une valeur numérique comprise entre 0 et 255 correspondant à une composante de luminance, tandis que le seuil fixé (3) est compris entre 235 et 255.
